# EUROPEAN PATENT APPLICATION

(11) **EP 2 584 615 A1**
(43) Date of publication of application: **24.04.2013**
(21) Application number: 12188730.1
(22) Date of filing: 16.10.2012
(51) Int. Cl.: H01L 31/048, H02G 3/08

(54) **Combiner box**

(30) Priority: 18.10.2011 TW 100219485
(71) Applicant: Yang, Chi-Jen, 73045 Tainan City (TW)
(72) Inventor: Yang, Chi-Jen, 73045 Tainan City (TW)
(74) Representative: Stephen, Robert John

(57) **Abstract**

A combiner box (100) includes a combiner module (10) and an electrical connector unit (6) disposed in a casing (2). The combiner module (10) includes an insulating board (3), and plural first and second input electrodes (41, 51) disposed on opposite surfaces (31, 32) of the insulating board (3) along a first direction (X) and corresponding respectively to plural first and second input sockets (221, 222) of the casing (2). The second input sockets (222) are disposed below and alternatingly arranged with the first input sockets (221) along the first direction (X). The electrical connector unit (6) includes plural first and second input terminals (61, 62) disposed in the first and second input sockets (221, 222) and electrically connected to the first and second input electrodes (41, 51), respectively.

## Description

The present invention relates to a combiner box, more particularly to a combiner box for combining multiple current inputs into one current output.

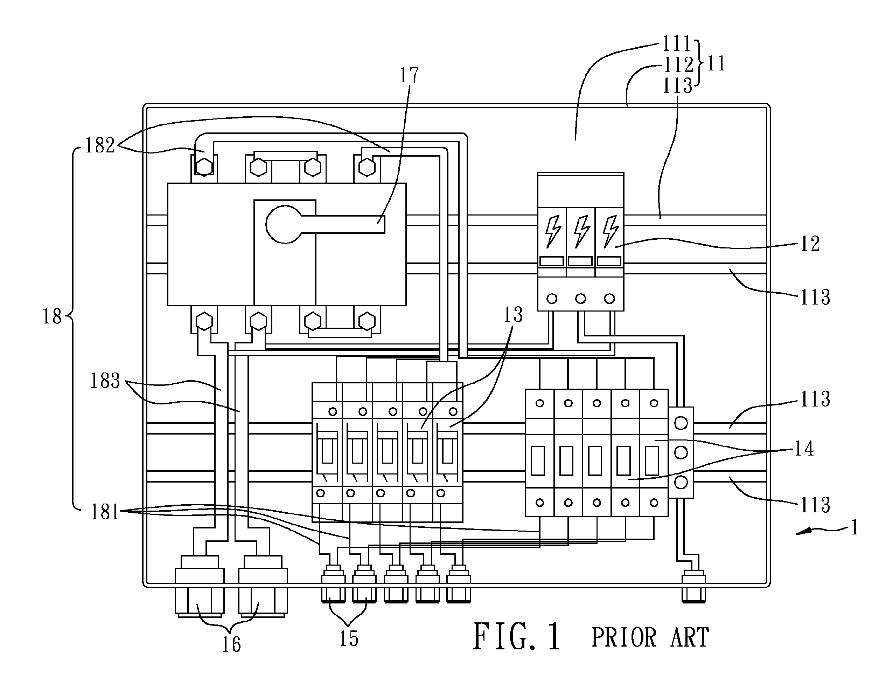

In solar energy generation, the combiner box is an electrical distribution box used for combining multiple direct-current (DC) inputs coming from respective solar panels so as to convert the DC inputs into one DC output. For example, Figure 1 illustrates a conventional combiner box 1 including a waterproof casing 11, a surge protector 12, a plurality of fuses 13, a plurality of input terminal blocks 14, a plurality of input connectors 15, a pair of output connectors 16, a DC breaker 17, and a conducting wire unit 18.

The waterproof casing 11, for example, satisfies an ingress protection rating (IP65) defined in international standard IEC 60529, and includes a bottom wall 111, a surrounding wall 112 projecting from and peripherally surrounding the bottom wall 111, and a plurality of mounting rails 113 disposed on the bottom wall 111. The surge protector 12, the fuses 13, the input terminal blocks 14 and the DC breaker 17 are mounted at the mounting rails 113 in the waterproof casing 11. The conducting wire unit 18 includes a plurality of input wires 181 electrically connecting the input connectors 15 to the fuses 13 and the input terminal blocks 14, a plurality of combining wires 182 electrically connecting the fuses 13 and the input terminal blocks 14 to the DC breaker 17, and a pair of output wires 183 electrically connecting the DC breaker 17 to the output connectors 16.

Regarding installation of the conventional combiner box 1, it is necessary to determine appropriate types and numbers of the surge protector 12, the fuses 13, the input terminal blocks 14 and the DC breaker 17, and to determine a size of the waterproof casing 11 accordingly. Then, the surge protector 12, the fuses 13, the input terminal blocks 14 and the DC breaker 17 are mounted on the mounting rails 113 of the waterproof casing 11, and a plurality of holes are formed through the surrounding wall 112 of the waterproof casing 11 for mounting the input connectors 15 and the output connectors 16 therethrough. After mounting the input connectors 15 and the output connectors 16 on the surrounding wall 112, the conventional combiner box 1 is provided with the input wires 181, the combining wires 182 and the output wires 183 for electrically connecting related components thereof.

The conventional combiner box 1 includes a relatively large number of the input terminal blocks 14, and therefore, a manufacturing cost of the conventional combiner box 1 is relatively high. Further, an electrical technician is required for wiring the conventional combiner box 1 and the wiring operation is a relatively complicated process. As a result, there is a high risk of human error during installation of the conventional combiner box 1, and the installation is time-consuming so that labor-related costs are high.

Therefore, an object of the present invention is to provide a combiner box that is relatively easy to install and that is less expensive to manufacture.

Accordingly, a combiner box of the present invention comprises a casing, a combiner module, and an electrical connector unit.

The casing includes a bottom wall and a surrounding wall cooperatively defining an accommodating space. The surrounding wall is formed with a plurality of first input sockets, a plurality of second input sockets, a first output socket and a second output socket. The first and second input sockets are spaced apart from each other and are arranged along a first direction parallel to the surrounding wall. The second input sockets are disposed at a level between the first input sockets and the bottom wall and are alternatingly arranged with the first input sockets along the first direction.

The combiner module is disposed in the accommodating space of the casing over the bottom wall, and includes an electrically insulating board, a first electrode set, andasecondelectrodeset. Theelectricallyinsulating board has a first surface, a second surface opposite to the first surface, and a first side connected between the first and second surfaces and extending along the first direction. The first electrode set is disposed over the first surface of the electrically insulating board, and includes a plurality of first input electrodes and a first output electrode. The first input electrodes are spaced apart from each other, are arranged along the first direction, and correspond to the first input sockets of the surrounding wall, respectively. The first output electrode is electrically connected to the first input electrodes and corresponds to the first output socket of the surrounding wall. The second electrode set is disposed on the second surface of the electrically insulating board, and includes a plurality of second input electrodes and a second output electrode. The second input electrodes are spaced apart from each other, are arranged along and partially cover the first side of the electrically insulating board, are disposed below the first input electrodes with respect to the electrically insulating board, and correspond to the second input sockets of the surrounding wall, respectively. The second output electrode is electrically connected to the second input electrodes and corresponds to the second output socket of the surrounding wall.

The electrical connector unit includes a plurality of first input terminals, a plurality of second input terminals, a first output component, and a second output component. The first input terminals are disposed in the first input sockets and are electrically connected to the first input electrodes, respectively. The second input terminals are disposed in the second input sockets and are electrically connected to the second input electrodes, respectively. The first and second output components correspond to the first and second output sockets and are electrically connected to the first and second output electrodes, respectively.

Other features and advantages of the present invention will become apparent in the following detailed description of the preferred embodiments with reference to the accompanying drawings, of which:
Figure 1 is a schematic view illustrating a conventional combiner box;
Figure 2 is a perspective view illustrating a first preferred embodiment of a combiner box of the present invention;
Figure 3 is an exploded view illustrating components of the combiner box of the first preferred embodiment;
Figure 4 is a perspective view illustrating a combiner module of the combiner box of the first preferred embodiment;
Figure 5 is a perspective view illustrating a second preferred embodiment of a combiner box of the present invention;
Figure 6 is an exploded view illustrating components of the combiner box of the second preferred embodiment;
Figure 7 is a perspective view illustrating a combiner module of the combiner box of the second preferred embodiment;
Figure 8 is a partially enlarged view of Figure 7 to illustrate a clamping unit of the combiner module of the second preferred embodiment for clamping a cable;
Figure 9 is a partially enlarged view of Figure 7 to illustrate a mounting frame of the combiner module of the second preferred embodiment;
Figure 10 is a schematic side view illustrating an example of the combiner module of the second preferred embodiment provided with a circuit protection device;
Figure 11 is a cross-sectional view of the mounting frame for illustrating dimensions thereof;
Figure 12 is a perspective view illustrating a third preferred embodiment of a combiner box of the present invention;
Figure 13 is an exploded view illustrating components of the combiner box of the third preferred embodiment;
Figure 14 is a perspective view illustrating an electrically insulating board of the combiner box of the third preferred embodiment;
Figure 15 is a perspective view illustrating a combiner module of the combiner box of the third preferred embodiment;
Figure 16 is a perspective view illustrating the combiner module of Figure 15 viewed from another angle;
Figure 17 is a schematic top view of the combiner module of the combiner box of the third preferred embodiment;
Figure 18 is a cross-sectional view taken along line I-I in Figure 17;
Figure 19 is a cross-sectional view taken along line II-II in Figure 17;
Figure 20 is a bottomperspective view of the combiner module of Figure 15; and
Figure 21 is a cross-sectional view taken along line III-III in Figure 17.

Before the present invention is described in greater detail, it should be noted that like elements are denoted by the same reference numerals throughout the disclosure.

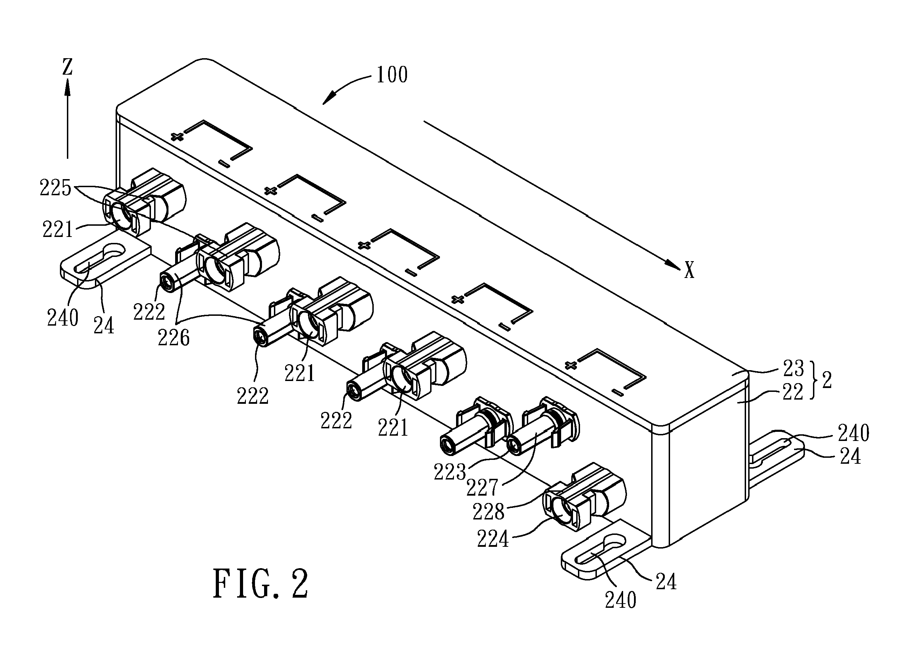

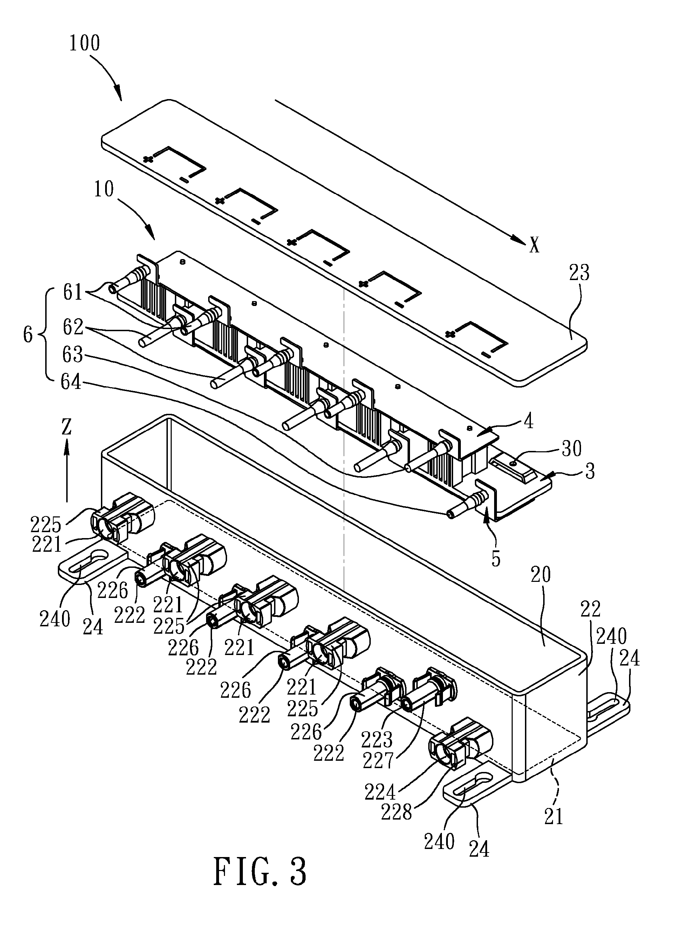

Referring to Figures 2 to 4, a first preferred embodiment of a combiner box 100 of this invention includes a casing 2, a combiner module 10 disposed in the casing 2, and an electrical connector unit 6.

In this embodiment, the casing 2 has a rectangular shape, and includes a bottom wall 21, a surrounding wall 22, a cover plate 23, and a plurality of mounting plates 24. The bottom wall 21 and the surrounding wall 22 cooperatively define an accommodating space 20, and the cover 23 removably covers the surrounding wall 22 to close the accommodating space 20. For the purpose of convenience of illustration, a direction parallel to one side of the surrounding wall 22 (e.g., a lengthwise side) is defined as a first direction (X), and a direction perpendicular to the bottom wall 21 (i.e., a height direction) is defined as a second direction (Z).

The surrounding wall 22 is formed with a plurality of first input sockets 221, a plurality of second input sockets 222, a first output socket 223 and a second output socket 224. The first and second input sockets 221, 222 are spaced apart from each other and are arranged along the first direction (X). In particular, the second input sockets 222 are disposed at a level between the first input sockets 221 and the bottom wall 21, and are alternatingly arranged with the first input sockets 221 along the first direction (X). The second output socket 224 is disposed below the first output socket 223, and is misaligned from the first output socket 223 along the second direction (Z). The mounting plates 24 project parallelly from the bottom wall 21, and are formed with respective mounting holes 240. Thecombiner box 100 can be secured to a peripheral wall (not shown) using fasteners (e.g., nails, screws, and the like) extending respectively through the mounting holes 240.

The combiner module 10 is disposed in the accommodating space 20 of the casing 2, and includes an electrically insulating board 3, a first electrode set 4 and a second electrode set 5.

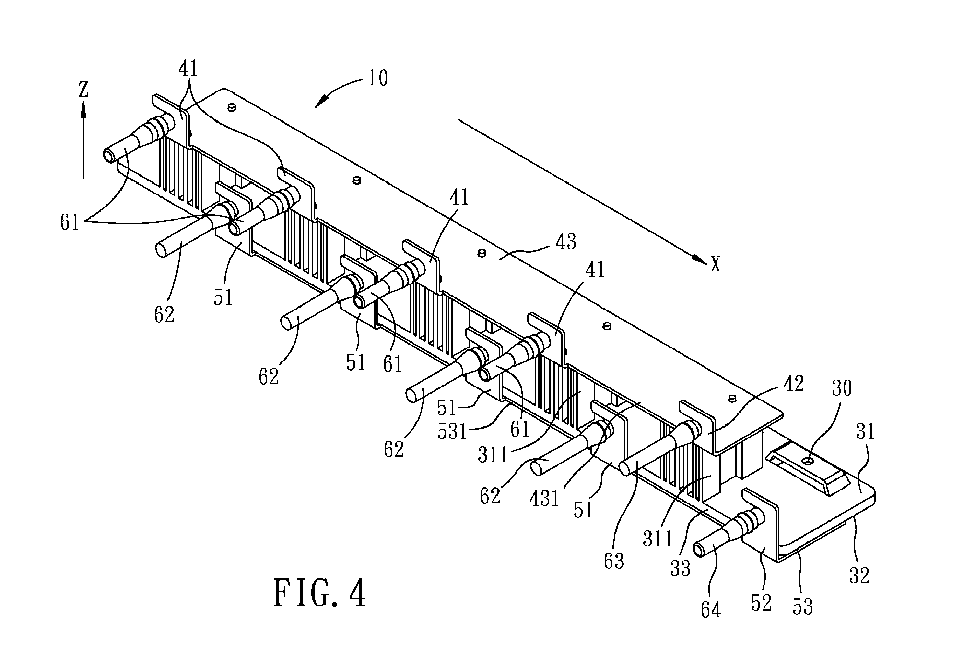

Referring to Figure 4, the electrically insulating board 3 has a first surface 31, a second surface 32 opposite to the first surface 31, and a first side 33 connected between the first and second surfaces 31, 32 and extending along the first direction (X). The electrically insulating board 3 includes a plurality of first insulating blocks 311 disposed on the first surface 31 at spaced-apart positions, projecting in the second direction (Z) away from the first surface 31, and arranged adjacent to the first side 33 of the electrically insulating board 3 along the first direction (X). Further, the electrically insulating board 3 is formed with a plurality of through holes 30 (only one is visible due to the viewing angle), and the electrically insulating board 3 can be secured to the bottom wall 21 of the casing 2, for example, using screws extending through the through holes 30.

The first electrode set 4 is disposed over the first surface 31 of the electrically insulating board 3, and includes a plurality of first input electrodes 41, a first output electrode 42 electrically connected to the first input electrodes 41, and an elongated first conductive plate 43. The first input electrodes 41 are spaced apart from each other and are arranged along the first direction (X). The first input electrodes 41 and the first output electrode 42 correspond to the first input sockets 221 and the first output socket 223 of the surrounding wall 22, respectively.

In this embodiment, the first conductive plate 43 is mounted on the first insulating blocks 311 along the first direction (X), and is integrally formed with the first input and output electrodes 41, 42 to establish electrical connection among the first input and output electrodes 41, 42. In particular, the first conductive plate 43 has a longitudinal side 431 adjacent to the first side 33 of the electrically insulating board 3, and the first input and output electrodes 41, 42 project from the longitudinal side 431 at positions corresponding respectively to the spaced-apart positions of the first insulating blocks 311 in the second direction (Z) away from the first surface 31 of the electrically insulating board 3.

The second electrode set 5 is disposed on the second surface 32 of the electrically insulating board 3, and includes a plurality of second input electrodes 51, a second output electrode 52 electrically connected to the second input electrodes 51, and an elongated second conductive plate 53. The second input electrodes 51 are spaced apart from each other, are arranged along the first direction (X), and partially cover the first side 33 of the electrically insulating board 3. The second input electrodes 51 and the second output electrode 52 are disposed below the first input electrodes 41 and the first output electrode 42 with respect to the electrically insulating board 3, and correspond to the second input sockets 222 and the second output socket 224, respectively.

In this embodiment, the second conductive plate 53 is mounted on the second surface 32 of the electrically insulating board 3 along the first direction (X). The second input electrodes 51 and the second output electrode 52 are integrally formed with the second conductive plate 53 such that the second input electrodes 51 are electrically connected to the second output electrode 52. In particular, the second conductive plate 53 has a longitudinal side 531 adjacent to the first side 33 of the electrically insulating board 3, and the second input electrodes 51 and the second output electrode 52 project from the longitudinal side 531 in the second direction (Z) toward the first surface 31 of the electrically insulating board 3.

The electrical connector unit 6 includes a plurality of first input terminals 61, a plurality of second input terminals 62, a first output component 63 and a second output component 64. The first input terminals 61 are disposed in the first input sockets 221, and are electrically connected to and substantially perpendicular to the first input electrodes 41 of the first electrode set 4, respectively. The second input terminals 62 are disposed in the second input sockets 222, and are electrically connected to and substantially perpendicular to the second input electrodes 51 of the second electrode set 5, respectively. The first and second output components 63, 64 correspond to and are registered with the first and second output sockets 223, 224, and are electrically connected to the first and second output electrodes 42, 52, respectively. In this embodiment, each of the first and second output components 63, 64 is an output terminal electrically connected to and substantially perpendicular to a respective one of the first and second output electrodes 42, 52.

In this embodiment, the casing 2 further includes a plurality of first input-connector jacks 225, a plurality of second input-connector jacks 226, a first output-connector jack 227 and a second output-connector jack 228 that are substantially perpendicular to and project from the surrounding wall 22 of the casing 2 outside of the accommodating space 20. The first input-connector jacks 225 are registered and in spatial communication with the first input sockets 221 of the surrounding wall 22 to receive the first input terminals 61 therein, respectively. The second input-connector jacks 226 are registered and in spatial communication with the second input sockets 222 of the surrounding wall 22 to receive the second input terminals 62 therein, respectively. The first and second output-connector jacks 227, 228 are registered and in spatial communication with the first and second output sockets 223, 224 of the surrounding wall 22 to receive the output terminals of the first and second output components 63, 64 therein, respectively. In practice, the casing 2 can be formed by injection molding. Since the feature of this invention does not reside in the method for manufacturing the casing 2, details thereof will be omitted herein for the sake of brevity.

For example, the first input terminals 61 of the electrical connector unit 6 are configured to be electrically connected to respective positive output ends of a power source, such as a solar energy converter (not shown), and the first output component (terminal) 63 of the electrical connector unit 6 is configured to be electrically connected to a positive input end of a back-end apparatus, such as a charge controller and an inverter (not shown). Accordingly, the second input terminals 62 of the electrical connector unit 6 are configured to be electrically connected to respective negative output ends of the power source, and the second output component (terminal) 64 of the electrical connector unit 6 is configured to be electrically connected to a negative input end of the back-end apparatus. In particular, the first input-connector jacks 225 are male connectors matching with female connectors of the power source, and the second output-connector jack 228 is also a male connector matching with a female connector of the back-end apparatus. The second input-connector jacks 226 are female connectors matching with male connectors of the power source, and the first output-connector jack 227 is also a female connector matching with a male connector of the back-end apparatus. Therefore, the first input terminals 61 and the second output component 64 are male connecting terminals, and the second input terminals 62 and the first output component 63 are female connecting terminals. It should be noted that the feature of this invention does not reside in the usage of specific male and female connectors and specific male and female connecting terminals, which may be readily appreciated by those skilled in the art, and the scope of this invention is not limited to the disclosure of this embodiment.

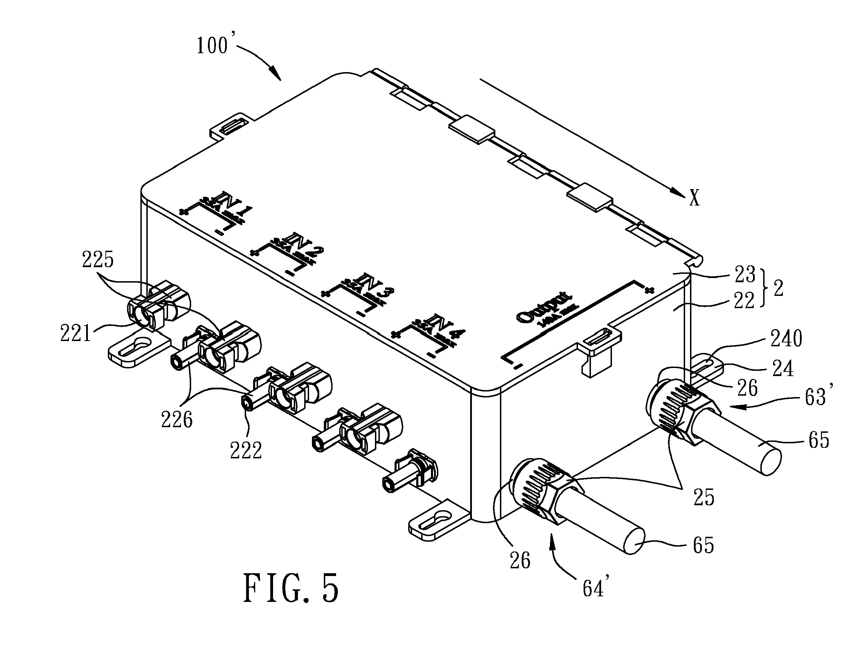

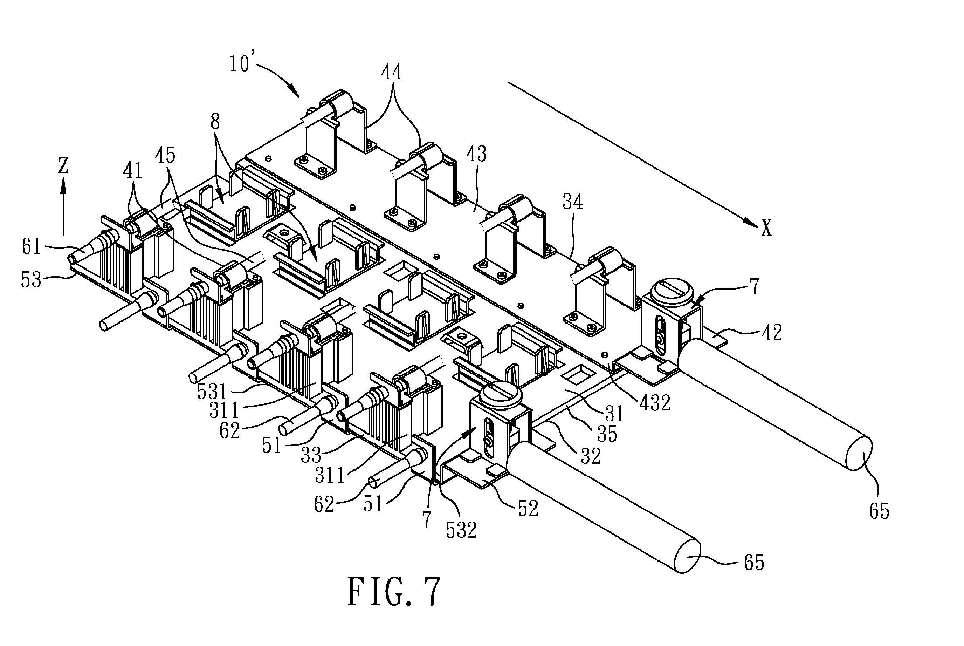

Referring to Figures 5 to 8, a second preferred embodiment of a combiner box 100' of this invention is shown to be similar to the first preferred embodiment. In the second preferred embodiment, configurations of the casing 2, the combiner module 10' and the first and second output components 63', 64' are different from those of the combiner box 100 of the first preferred embodiment.

In this embodiment, the electrically insulating board 3 of the combiner module 10' further has a second side 34 and a third side 35 that are connected between the first and second surfaces 31, 32. In particular, the second side 34 is opposite and parallel to the first side 33, and the third side 35 is perpendicular to the first and second sides 33, 34.

The first electrode set 4 of the combiner module 10' further includes a plurality of conductive frames 44 and a plurality of conducting wire components 45. Unlike the first preferred embodiment, the first conductive plate 43 is mounted on the first surface 31 of the electrically insulating board 2 at the second side 34, extends along the first direction (X), and has one end 432 adjacent to the third side 35. In this embodiment, the first output electrode 42 of the first electrode set 4 is integrally formed with the first conductive plate 43, projects upwardly from said one end 432 of the first conductive plate 43 with respect to the first surface 31 (i.e., along the second direction (Z)), and is bent toward the first direction (X).

The conductive frames 44 of the first electrode set 4 are electrically connected to and mounted on the first conductive plate 43, and are arranged along the first direction (X) at positions corresponding to the spaced-apart positions of the first insulating blocks 311, respectively. In particular, a height of each of the conductive frames 44 in the second direction (Z) is substantially equal to a height of each of the first insulating blocks 311 in the same direction. The first input electrodes 41 of the first electrode set 4 are mounted on the first insulating blocks 311, respectively. Each of the conducting wire components 45 electrically connects a respective one of the first input electrodes 41 to a corresponding one of the conductive frames 44 with a least distance therebetween, so as to electrically connect the first input electrodes 41 to the first output electrode 42.

The second conductive plate 53 of the second electrode set 5 is similar to that of the first preferred embodiment, and has one end 532 adjacent to the third side 35 of the electrically insulating board 3. In this embodiment, the second output electrode 52 is integrally formed with the second conductive plate 53, projects upwardly from said one end 532 of the second conductive plate 53 with respect to the first surface 31 (i.e., along the second direction (Z)), and is bent toward the first direction (X).

In this embodiment, each of the first and second output components 63', 64' of the electrical connector unit 6 is a connector allowing a cable 65 having a core 651 to be inserted therethrough, so that the core 651 is electrically connected to a respective one of the first and second output electrodes 42, 52. The connector of each of the first and second output components 63' and 64' includes a union nut 26 and a waterproof nut 25. The union nut 26 is substantially perpendicular to and projects from the surrounding wall 22 outside of the accommodating space 20, and is registered and in spatial communication with a respective one of the first and second output sockets 223 and 224 of the surrounding wall 22 to allow insertion of the cable 65. The waterproof nut 25 is fittingly sleeved around the union nut 26 for securing the cable 65 received in the union nut 26.

It should be appreciated that the waterproof nut 25 is used for preventing moisture and rainwater, which may damage the combiner module 10' received in the accommodating space 20, from permeating into the accommodating space 20 through the first and second output sockets 223 and 224. Further, the casing 2 may additionally include a waterproof ring 260 surrounding a periphery of the cover plate 23 for enhancing the moisture-proof ing effect. For example, the waterproof ring 260 may be made of silicone.

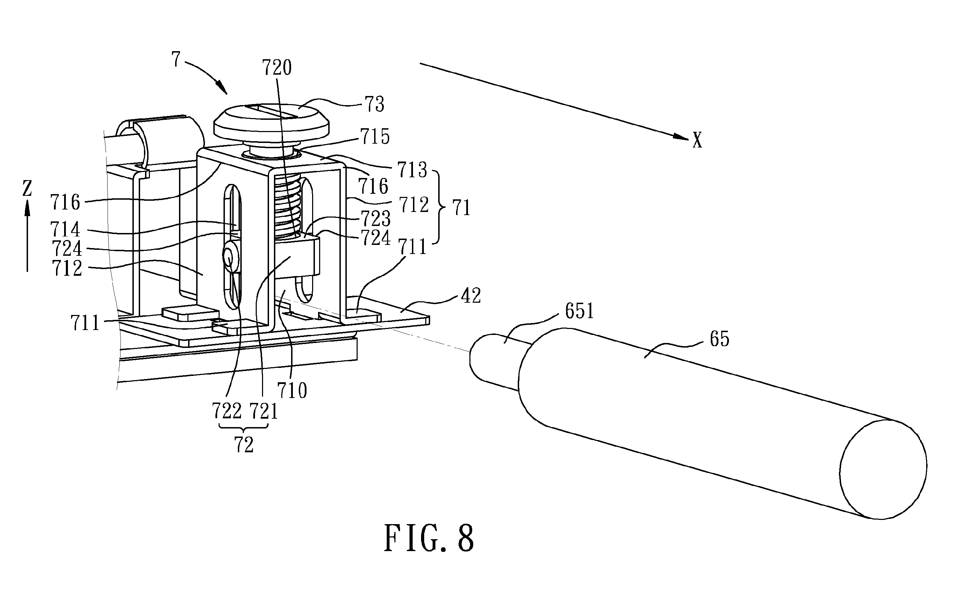

In this embodiment, the combiner module 10' further includes a pair of clamping units 7 for clamping and securing the cables 65 to the first and second output electrodes 42 and 52, respectively. In particular, as best shown in Figure 8, each of the clamping units 7 includes a fixed frame 71, a slidable block 72 and a bolt 73.

The fixed frame 71 has four base plates 711 (only three are visible due to the viewing angle) mounted on a corresponding one of the first and second output electrodes 42 and 52, a pair of vertical plates 712 each of which is connected perpendicularly to a corresponding pair of the base plates 711, and a top plate 713 connected to the vertical plates 712 and formed with a through hole 715. The vertical plates 712 and the top plate 713 cooperatively define a clamping space 710 for receiving the core 651 of the cable 65. In particular, each of the vertical plates 712 extends from the corresponding pair of the base plates 711, which are registered with each other along the first direction (X), along the second direction (Z) and has a top edge 716, and the top plate 713 is connected to the top edges 716 of the vertical plates 712. Further, each of the vertical plates 712 is formed with a slot 714 extending along the second direction (Z). The slots 714 of the vertical plates 712 and the through hole 715 of the top plate 713 are in spatial communication with the clamping space 710.

The slidable block 72 includes a block body 721 and a pair of slide rods 722. The block body 721 is fittingly disposed in the clamping space 710, and has a top surface 723 facing the top plate 713 and being formed with a threaded hole 720, and a pair of side surfaces 724 facing the vertical plates 712, respectively. The slide rods 722 project from the side surfaces 724 of the block body 721 and extend slidably into the slots 714 of the vertical plates 712, respectively. The bolt 73 extends through the through hole 715 in the top plate 713 and is screwed into the threaded hole 720 in the block body 721 of the slidable block 72 for moving the slidable block 72 upwardly and downwardly (i.e., in the second direction (Z)) in the clamping space 710 with respect to the corresponding one of the first and second output electrodes 42 and 52. Thus, the slidable block 72 is urged to press and secure the core 651 of the cable 65 abutting against the corresponding one of the first and second output electrodes 42 and 52.

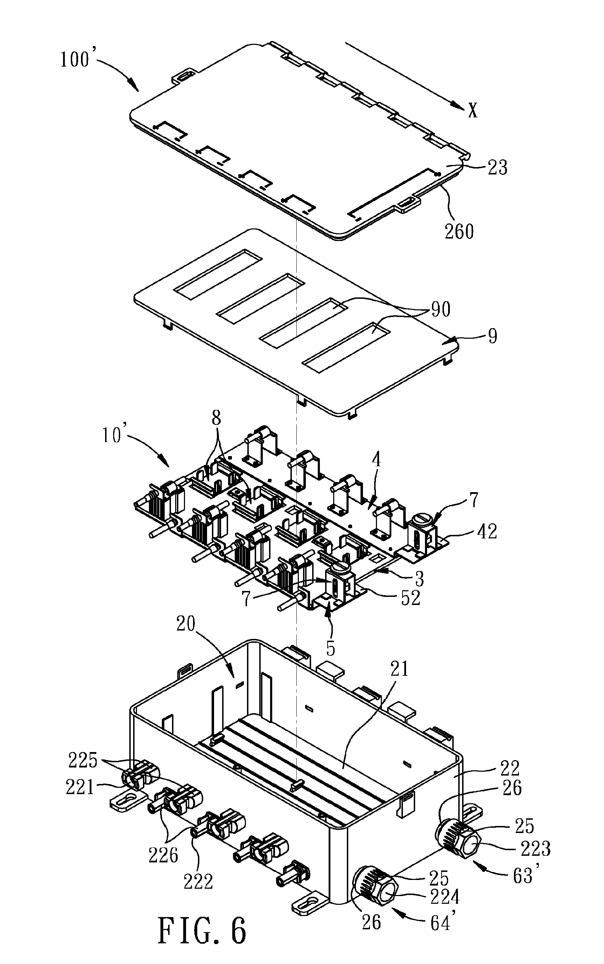

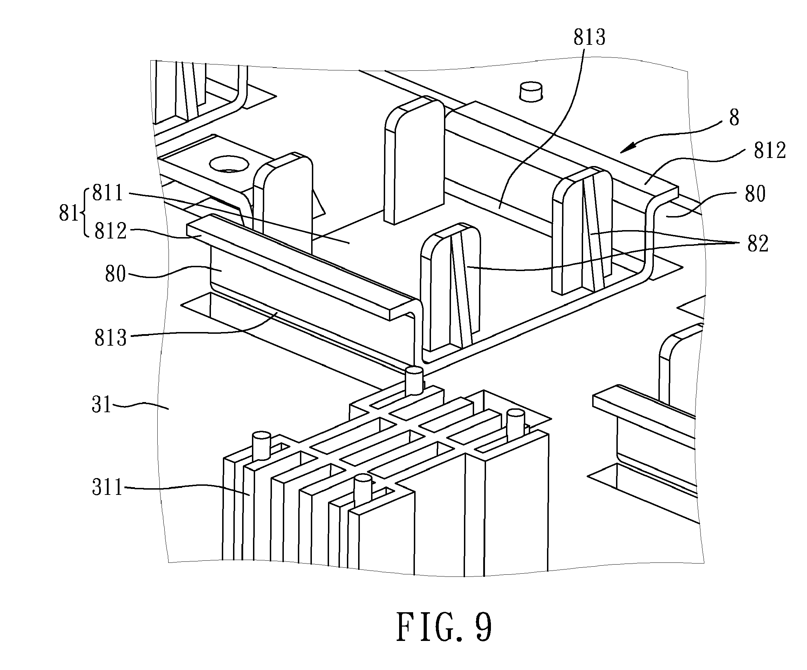

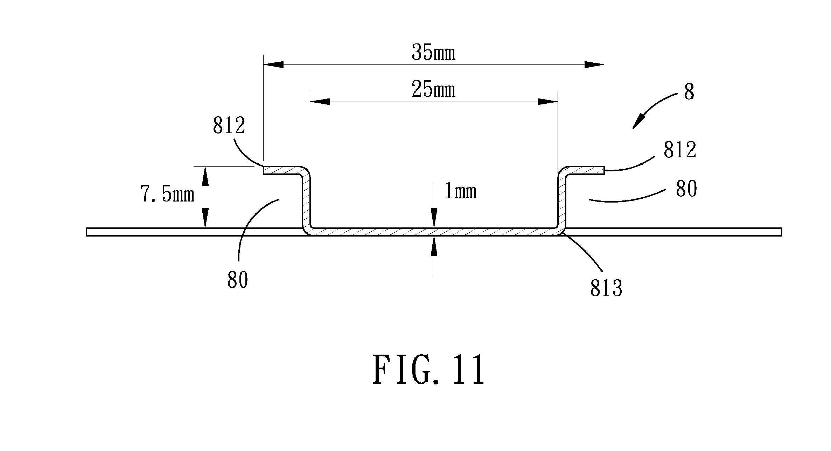

Referring to Figures 6, 7 and 9, the combiner module 10' of this embodiment further includes a plurality of mounting frames 8 disposed on a middle portion of the first surface 31 of the electrically insulating board 3 between the first and second sides 33 and 34 and arranged along the first direction (X). For example, the mounting frames 8 may be integrally formed with the electrically insulating board 3. Each of the mounting frames 8 includes a base 81 and a plurality of positioning plates 82. The base 81 of each of the mounting frames 8 includes a base part 811 disposed on the first surface 31 and having two opposite edges 813 parallel to the first direction (X), and a pair of protrusion parts 812 projecting respectively from the edges 813 in the second direction (Z) away from the first surface 31 and bent toward opposite directions parallel to the first surface 31. The positioning plates 82 project from the base part 811 in the second direction (Z) away from the first surface 31. Each of the protrusion parts 812 cooperates with the first surface 31 to form a groove 80 therebetween. In this embodiment, each of the mounting frames 8 has a dimension of 35mm from a distal end of one of the protrusion parts 812 to a distal end of the other one of the protrusion parts 812 (see Figure 11).

The combiner box 100' of this embodiment further includes a partition plate 9 disposed in the accommodating space 20 in the casing 2 over the combiner module 10', engaged with the surrounding wall 22, and formed with a plurality of openings 90. In particular, the mounting frames 8 are registered with the openings 90 in the partition plate 9, respectively.

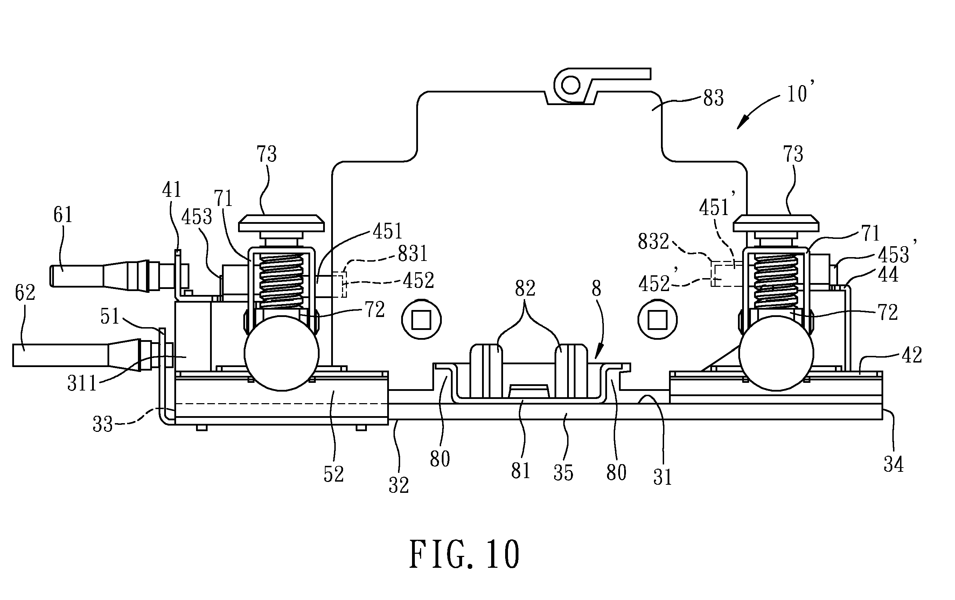

Figure 10 illustrates an example of the combiner box 100' of the second preferred embodiment provided with a plurality of circuit protection devices 83 (only one is visible due to the viewing angle), such as a fuse, a surge protector, etc.. For example, the circuit protection devices 83 are used for stabilizing current inputs from the power source and current outputs to the back-end apparatus. Each of the circuit protection devices 83 is mounted on one of mounting frames 8 and is engaged with the grooves 80 of the respective mounting frame 8, and is prevented from moving along the first direction (X) by the positioning plates 82 of the respective mounting frame 8. In particular, each of the circuit protection devices 83 includes a first socket 831 adjacent to a respective one of the first input electrodes 41 and a second socket 832 adjacent to a corresponding one of the conductive frames 44.

In this example, each of the conducting wire components 45 of the first electrode set 4 includes a pair of wires 451 and 451'. The wire 451 has one end 453 electrically connected to the respective first input electrode 41, and the other end 452 inserted into and electrically connected to the first socket 831 of one of the circuit protection devices 83. The other wire 451' has one end 453' electrically connected to the corresponding conductive frame 44 and the other end 452' inserted into and electrically connected to the second socket 832 of said one of the circuit protection devices 83. The wires 451 and 451' of each of the conducting wire components 45 are electrically connected to each other through a respective one of the circuit protection devices 83. The ends 452, 452' of the respective wires 451, 451' are held by respective metal rods (not shown) in the first and second sockets 831, 832, respectively. When the circuit protection devices 83 are installed on the combiner module 10' of the combiner box 100', the circuit protection devices 83 are exposed from the partition plate 9 through the openings 90, respectively. As a result, the mounting frames 8 and the openings 90 of the partition plate 9 facilitate assembly/disassembly of the circuit protection devices 83.

In this embodiment, the first and second input sockets 221, 222, the first and second input terminals 61, 62 and the first and second input-connector jacks 225, 226 are similar to those of the first preferred embodiment.

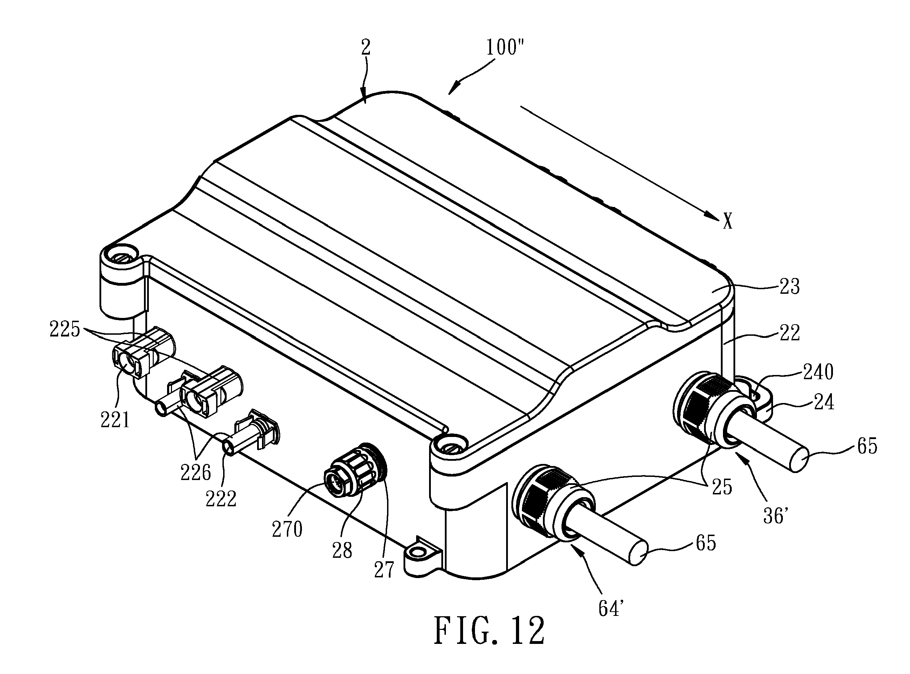

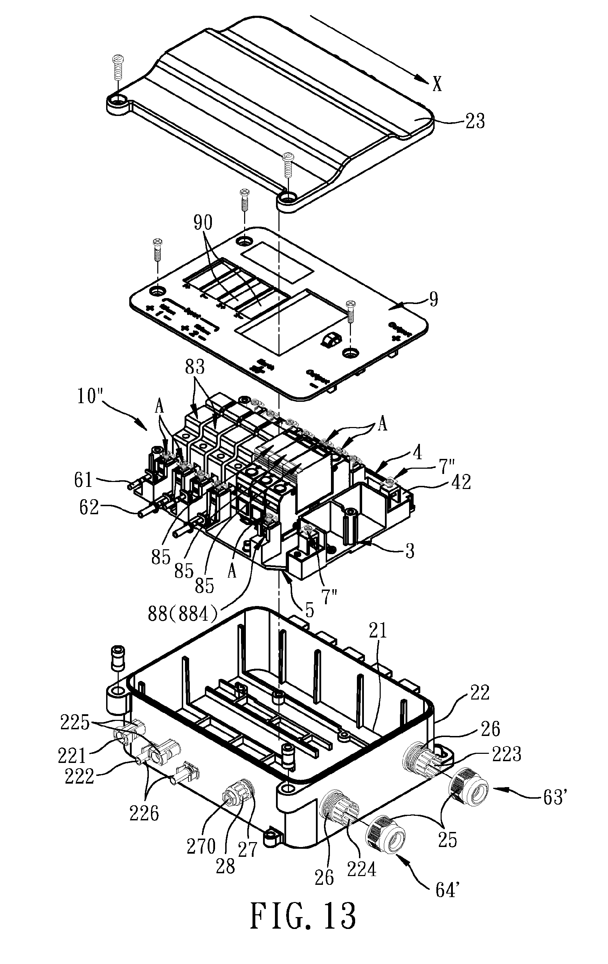

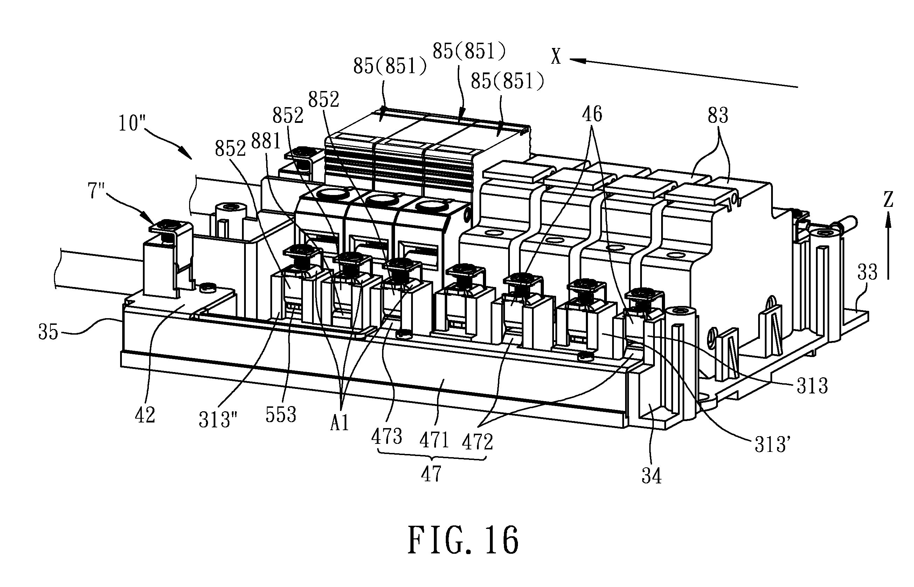

Referring to Figures 12 to 16, a third preferred embodiment of a combiner box 100" of this invention is shown to be similar to the combiner box 100' of the second preferred embodiment. Instead of the first conductive plate 43, the conductive frames 44, the conducting wire components 45 and the second conductive plate 53 of the second preferred embodiment, the combiner module 10" has a different configuration.

The electrically insulating board 3 of the combiner module 10" further includes a plurality of second insulating blocks 312, a plurality of third insulating blocks 313 and 313', a fourth insulating block 314, and a plurality of fifth insulating blocks 313". These insulating blocks 312, 313, 313', 313" and 314 are disposed on the first surface 31 of the electrically insulating board 3 and project in the second direction (Z) away from the first surface 31.

The second insulating blocks 312 are disposed on the first surface 31 at spaced-apart positions corresponding respectively to the second input electrodes 51 of the second electrode set 5, and are alternatinglyarranged with the first insulating blocks 311 at the first side 33 of the electrically insulating board 3 along the first direction (X). The second input electrodes 51 are disposed on the second insulating blocks 312, respectively. Each of the first insulating blocks 311 includes a first outer portion 315 disposed along and adjacent to the first side 33 and having a first dimension in the second direction (Z), and a first inner portion 316 connected to the first outer portion 315 and farther from the first side 33 than the first outer portion 315. Similarly, each of the second insulating blocks 312 includes a second outer portion 317 disposed along and adjacent to the first side 33 and having a second dimension in the second direction (Z) shorter than the first dimension of the first outer portion 315, and a second inner portion 318 connected to the second outer portion 317 and farther from the first side 33 than the second outer portion 317.

The third insulating blocks 313, 313' are disposed at the second side 34 of the electrically insulating board 3 along the first direction (X), and are divided into a first group and a second group. In particular, the third insulating blocks 313 of the first group are disposed at spaced-apart positions corresponding respectively to the first insulating blocks 311, and the third insulating blocks 313' of the second group are disposed at spaced-apart positions corresponding respectively to the second insulating blocks 312.

The fourth insulating block 314 is disposed at the first side 33 close to the third side 35 of the electrically insulating board 3. The fifth insulating blocks 313" are arranged along the second side 34 close to the third side 35, and are aligned with the third insulating blocks 313 and 313'. The surrounding wall 22 of the casing 2 is further formed with a ground-wire socket 270 at a position registered with the fourth insulating block 314 and allowing a ground wire (not shown) to be inserted therethrough. The casing 2 further includes a union but base 27 substantially perpendicular to and projecting from the surrounding wall 22 outside of the accommodating space 20 and registered with and in spatial communication with the ground-wire socket 270 to allow insertion of the ground wire, and a waterproof nut 28 fittingly sleeved around the union nut base 27 for securing the ground wire received in the union nut base 27.

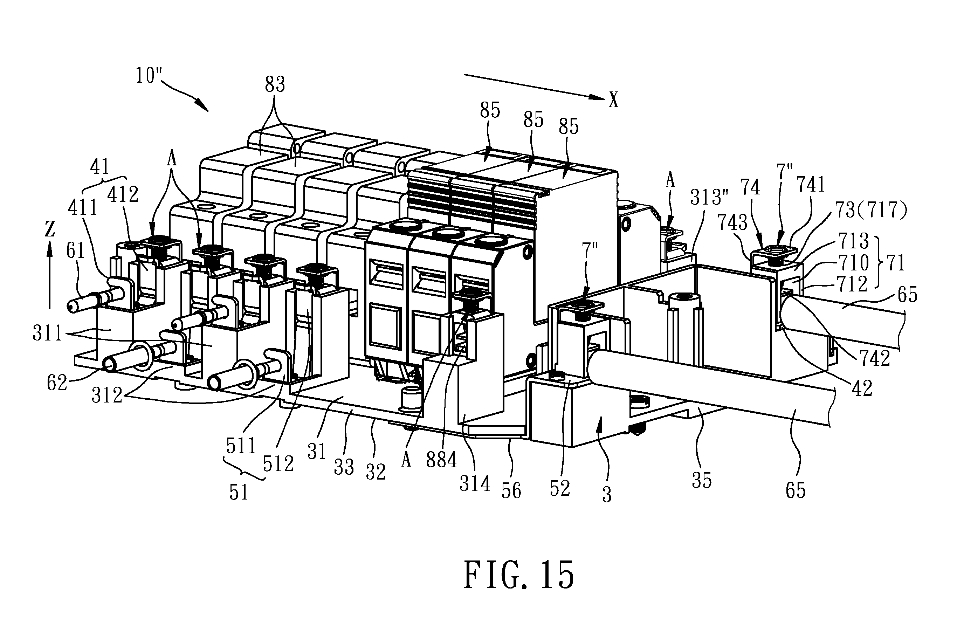

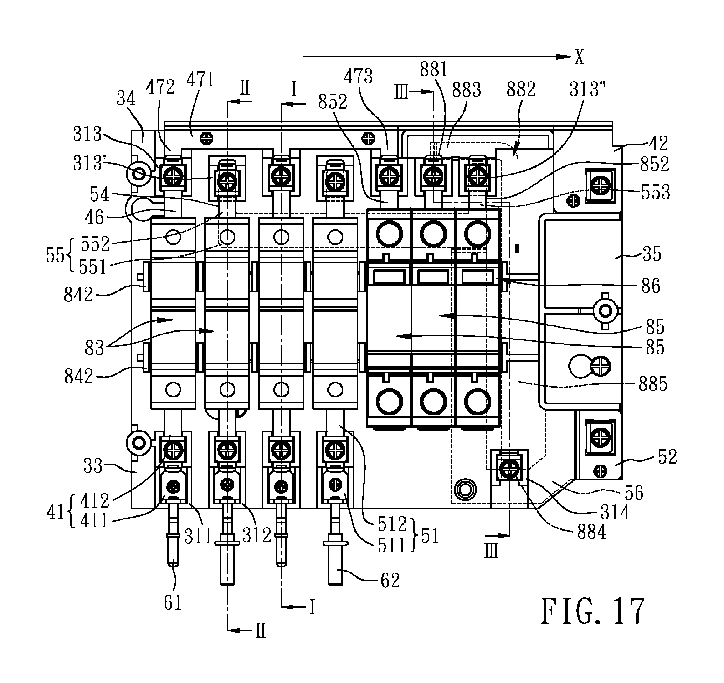

Referring to Figures 15 to 18, each of the first input electrodes 41 of the first electrode set 4 of the combiner module 10" is mounted on a respective one of the first insulating blocks 311, and includes a first electrode outer segment 411 and a first electrode inner segment 412. The first electrode outer segment 411 is disposed on the first insulating block 311, extends from the first outer portion 315 to the first inner portion 316 of the first insulating block 311, and is electrically connected to a respective one of the first input terminals 61. The first electrode inner segment 412 partially overlaps and is electrically connected to the first electrode outer segment 411, and extends from the first inner portion 316 of the first insulating block 311 toward the second side 34 of the electrically insulating board 3.

In the third preferred embodiment, the first electrode set 4 of the combiner module 10" further includes a plurality of first connecting electrodes 46 and a first conductive bus-plate 47. The first connecting electrodes 46 are disposed respectively on the third insulating blocks 313 of the first group, extend respectively from the third insulating blocks 313 of the first group toward the first side 33 of the electrically insulating board 3, and are connected electrically and respectively to the first input electrodes 41. The first conductive bus-plate 47 is disposed on the first surface 31 of the electrically insulating board 3 at the second side 34, and includes a first bus segment 471 disposed on the first surface 31 and extending along the first direction (X), and a plurality of first connecting segments 472 and a first connecting piece 473 that are electrically connected to and extend from the first bus segment 471 toward the first side 33. The first connecting segments 472 are connected electrically and respectively to bottom surfaces of the first connecting electrodes 46. In this embodiment, the first output electrode 42 is disposed at the third side 35 of the electrically insulating board 3, and is integrally formed with the first conductive bus-plate 47.

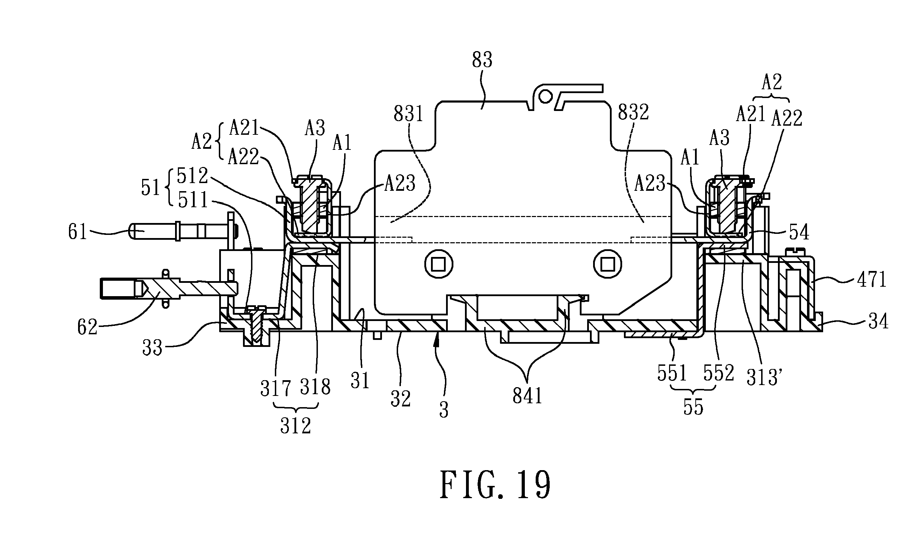

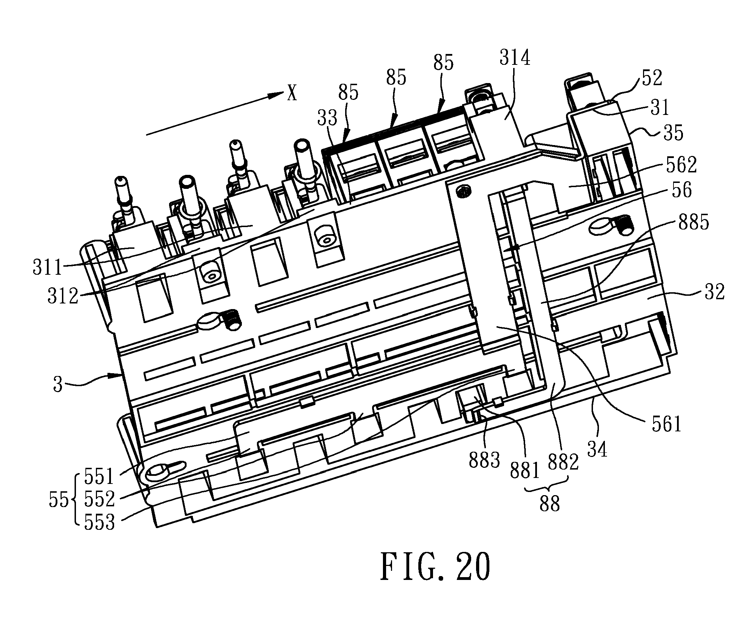

Referring to Figures 15 to 17, 19 and 20, each of the second input electrodes 51 of the second electrode set 5 of the combiner module 10" is mounted on a respective one of the second insulating blocks 312, and includes a second electrode outer segment 511 and a second electrode inner segment 512. Thesecondelectrodeouter segment 511 is disposed on the second insulating block 312, extends from the second outer portion 317 to the second inner portion 318 of the second insulating block 312, and is electrically connected to a respective one of the second input terminals 62. The second electrode inner segment 512 partially overlaps and is electrically connected to the second electrode outer segment 511, and extends from the second inner portion 318 of the second insulating block 312 toward the second side 34 of the electrically insulating board 3.

The second electrode set 5 of the combiner module 10" further includes a plurality of second connecting electrodes 54, a second conductive bus-plate 55, and aconductingplate56. The second connecting electrodes 54 are disposed respectively on the third insulating blocks 313' of the second group, extend respectively from the third insulating blocks 313' of the second group toward the first side 33 of the electrically insulating board 3, and are connected electrically and respectively to the second input electrodes 51. The second conductive bus-plate 55 is disposed on the second surface 32 of the electrically insulating board 3 close to the second side 34, and includes a second bus segment 551 that is disposed on the second surface 32 and that extends along the first direction (X), and a plurality of second connecting segments 552 and a second connecting piece 553 that are electrically connected to and extend from the second bus segment 551 through the electrically insulating board 3 to the first surface 31. The second connecting segments 552 are connected electrically and respectively to bottom surfaces of the second connecting electrodes 54.

The conducting plate 56 is disposed on the second surface 32 of the electrically insulating board 3 close to the third side 35, extends from the second bus segment 551 of the second conductive bus-plate 55 toward the second output electrode 52, and is electrically connected to the second bus segment 551 and the second outputelectrode52. In this embodiment, the conducting plate 56 is an L-shaped metal plate, and has one end 561 electrically connected to the second bus segment 551 of the second conductive bus-plate 55 and the other end 562 electrically connected to the second output electrode 52 of the second electrode set 5. The second output electrode 52 is disposed at the third side 35 and is integrally formed with the conducting plate 56.

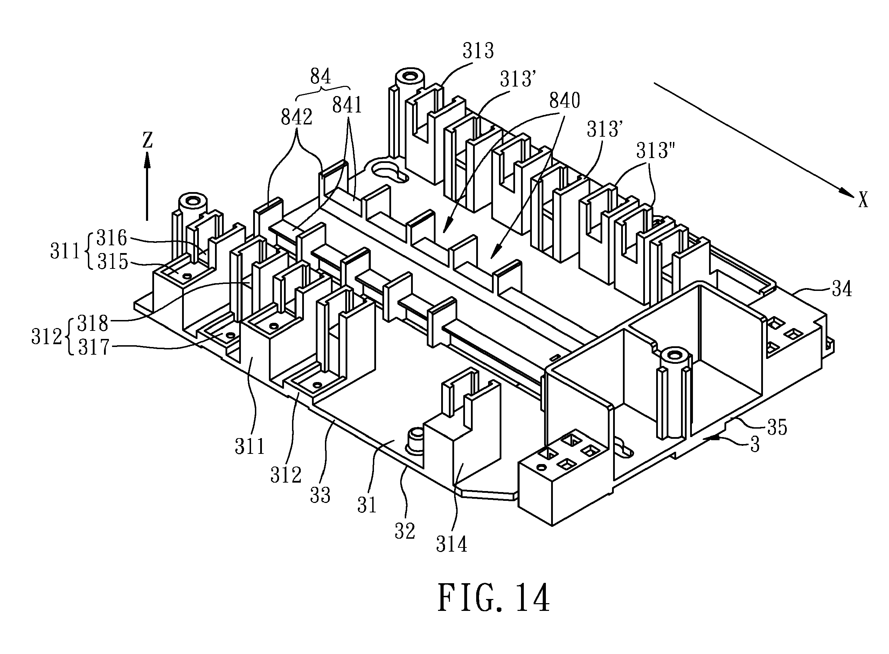

Referring to Figures 14 to 19, instead of the mounting frames 8 of the second preferred embodiment, the combiner module 10" of the third preferred embodiment further includes a mounting unit 84. The mounting unit 84 is integrally formed with the electrically insulating board 3, and includes a pair of spaced-apart protruding rods 841 and plural pairs of positioning components 842. The protruding rods 841 are disposed on a middle portion of the first surface 31 of the electrically insulating board 3 between the first and second sides 33, 34, and extend along the first direction (X). Each pair of the positioning components 842 are disposed respectively on the protruding rods 841, are registered with each other, and are spaced apart from another pair of the positioning components 842 in the first direction (X). Adjacent two pairs of the positioning components 842 cooperatively define a receiving space 840 registered with a corresponding one of the first and second insulating blocks 311, 312 and with a corresponding one of the third insulating blocks 313, 313'.

Each of the circuit protection devices 83 is mounted on the protruding rods 841 in the receiving space 840 between the adjacent two pairs of the positioning components 842, and is prevented from moving along the first direction (X) by the adjacent two pairs of the positioning components 842. In particular, the first socket 831 of each of the circuit protection devices 83 is adjacent to a respective one of the first and second input electrodes 41, 51, and the second socket 832 thereof is adjacent to a corresponding one of the third insulating blocks 313, 313'. The first electrode inner segments 412 of the first input electrodes 41 and the second electrode inner segments 512 of the second input electrodes 51 are inserted into and electrically connected to the first sockets 831 of the circuit protection devices 83, respectively. The first connecting electrodes 46 of the first electrode set 4 and the second connecting electrodes 54 of the second electrode set 5 are inserted into and electrically connected to the second sockets 832 of the circuit protection devices 83, respectively. As a result, the first and second connecting electrodes 46, 54 are electrically connected to the first and second input electrodes 41, 51 through the circuit protection devices 83, respectively.

In the third embodiment, the first input terminals 61 are substantially perpendicular to the first outer segments 411 of the first input electrodes 41 of the first electrode set 4, respectively, and the second input terminals 62 are substantially perpendicular to the second outer segments 511 of the second input electrodes 51 of the second electrode set 5, respectively.

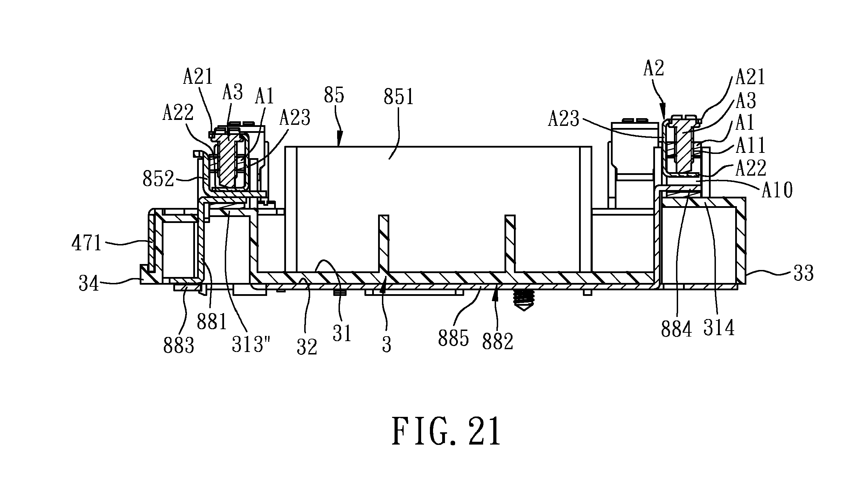

Referring to Figures 15 to 17, 20 and 21, the combiner box 100" of this embodiment further includes a plurality of surge protectors 85 arranged on the first surface 31 of the electrically insulating board 3 along the first direction (X) at positions registered respectively with the fifth insulation blocks 313". Each of the surge protectors 85 includes a main body 851 disposed on the protruding rods 841 of the mounting unit 84, and an electrode plate 852 disposed on a corresponding one of the fifth insulation blocks 313" and connected to the main body 851. The first connecting piece 473 of the first conductive bus-plate 47 of the first electrode set 4 is electrically connected to a bottom surface of the electrode plate 852 of a first one of the surge protectors 85, and the second connecting piece 553 of the second conductive bus plate 55 of the second electrode set 5 is electrically connected to a bottom of the electrode plate 852 of a second one of the surge protectors 85.

The combiner module 10" additionally includes a grounding electrode set 88 including a first grounding electrode 881 and a second grounding electrode 882. The first grounding electrode 881 is disposed at a corresponding one of the fifth insulating blocks 313" that is registered with a third one of the surge protectors 85 (i.e., a middle one of the surge protectors 85 in this embodiment), is electrically connected to the electrode plate 852 of the third one of the surge protectors 85, and extends from the first surface 31 through the electrically insulating board 3 to the second surface 32. The second grounding electrode 882 is disposed on the second surface 32 of the electrically insulating board 3, extends from the first grounding electrode 881 toward the first side 33, and extends through the electrically insulating board 3 to the first surface 31. The second ground electrode 882 includes a first segment 883 electrically connected to the first grounding electrode 881 and extending along the second side 34, a middle segment 885 extending from the first segment 883 toward the first side 33, and a second segment 884 extending from the middle segment 885 through the electrically insulating board 3 to the first surface 31 and disposed at the fourth insulating block 314. The second segment 884 is to be electrically connected to the ground wire inserted through the ground-wire socket 270 in the surrounding wall 22, such that the third one of the surge protectors 85 may be grounded to the outside of the casing 2 through the ground wire.

Referring to Figure 15, instead of the clamping units 7 of the second preferred embodiment, the combiner module 10" of the third preferred embodiment includes a pair of cable-clamping units 7" for clamping and securing the cables 65 to the first and second output electrodes 42 and 52, respectively. Each of the cable-clamping units 7" includes a fixed frame 71, a C-shaped component 74, and bolt 73.

The fixed frame 71 has a pair of vertical plates 712 and a top plate 713. The vertical plates 712 are connected perpendicularly to a corresponding one of the first and second output electrodes 42, 52, and extend along the second direction (Z). The top plate 713 is connected to top edges of the vertical plates 712, is formed with a threaded through hole 717, and cooperates with the vertical plates 712 to define a clamping space 710 for receiving the cable 65. The C-shaped component 74 has a first plate portion 741 disposed out of the clamping space 710 and parallel to the top plate 713 of the fixed frame 71, a vertical plate portion 743 connected vertically to the first plate portion 741 and extending toward the clamping space 710, and a second plate portion 742 connected vertically to the vertical plate portion 743 and disposed in the clamping space 710. The bolt 73 is disposed at and extends through the first plate portion 741 of the C-shaped component 74, and is screwed into the threaded through hole 717 in the top plate 713 for moving the second plate portion 742 of the C-shaped component 74 upwardly and downwardly in the clamping space 710 with respect to the corresponding one of the first and second output electrodes 42, 52. As a result, the bolt 73 may urge the second plate portion 742 to press the cable 65 abutting against the corresponding one of the first and second output electrodes 42, 52.

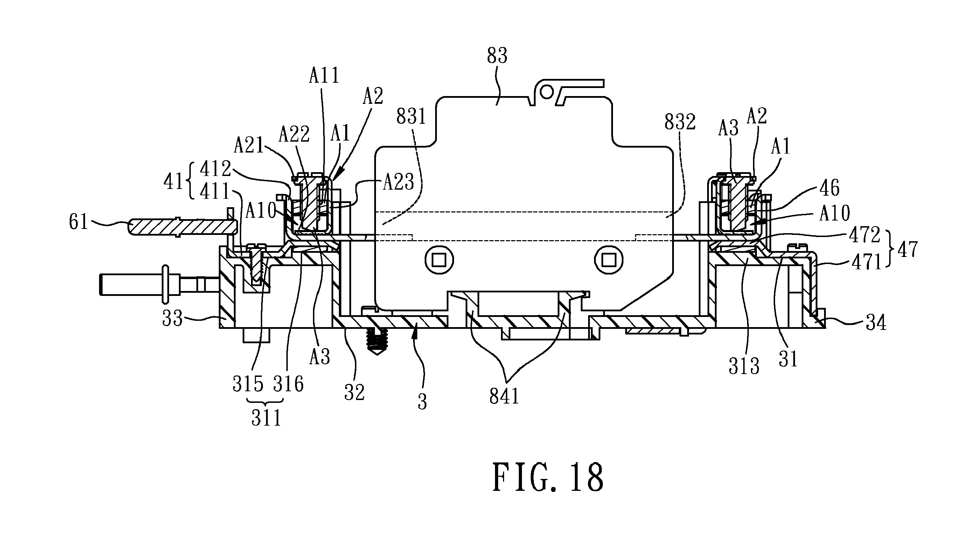

Referring to Figures 18, 19 and 21, the combiner module 10" further includes a plurality of electrode-clamping units (A) mounted respectively on the first, second, third, fourth and fifth insulating blocks 311, 312, 313, 313', 314, 313". Each of the electrode-clamping units (A) includes a mounting frame (A1), a C-shaped member (A2) and a bolt member (A3). Inparticular, theelectrode-clampingunits (A) mounted on the first insulating blocks 311 are disposed respectively at the first inner portions 316 of the first insulating blocks 311, and the electrode-clamping units (A) mounted on the second insulating blocks 312 are disposed respectively at the second inner portions 318 of the second insulating blocks 312.

The mounting frame (A1) is mounted on and cooperates with a corresponding one of the first, second, third, fourth and fifth insulating blocks 311, 312, 313, 313', 314, 313" to define an accommodating space (A10) therebetween, and is formed with a threaded inner hole (A11). In particular, the mounting frames (A1) of the electrode-clamping units (A) mounted on the first insulating blocks 311 are disposed above the first electrode inner segments 412 of the first input electrodes 41, respectively. The mounting frames (A1) of the electrode-clamping units (A) mounted on the second insulating blocks 312 are disposed above the second electrode inner segments 512 of the second input electrodes 51, respectively. The mounting frames (A1) of the electrode-clamping units (A) mounted on the third insulating blocks 313 of the first group are disposed above the first connecting electrodes 46, respectively. The mounting frames (A1) of the electrode-clamping units (A) mounted on the third insulating blocks 313' of the second group are disposed above the second connecting electrodes 54, respectively. The mounting frame (A1) of the electrode-clamping unit (A) mounted on the fourth insulating block 314 is disposed above the second segment 884 of the second ground electrode 882. The mounting frames (A1) of the electrode-clamping units (A) mounted on the fifth insulating blocks 313" are disposed above the electrode plates 852 of the surge protectors 85, respectively.

The C-shaped member (A2) has a first plate portion (A21) disposed out of the accommodating space (A10), a vertical plate portion (A23) connected vertically to the first plate portion (A21) and extending toward the accommodating space (A10), and a second plate portion (A22) connected vertically to the vertical plate portion (A23) and disposed in the accommodating space (A10).

The bolt member (A3) is disposed at and extends through the first plate portion (A21) of the C-shaped member (A2), and is screwed into the threaded inner hole (A11) in the mounting frame (A1) for moving the second plate portion (A22) of the C-shaped member (A2) upwardly and downwardly in the accommodating space (A10) with respect to the corresponding one of the insulating blocks 311, 312, 313, 313', 313", 314. As a result, the bolt member (A3) may urge the second plate portion (A22) to press and make a corresponding one of the first and second input electrodes 41 and 51, the first and second connecting electrodes 46 and 54, the electrode plates 852 of the surge protectors 85, and the ground wire abut against the corresponding one of the insulating blocks 311, 312, 313, 313', 313", 314.

In the third preferred embodiment, by virtue of the modified configurations of the first and second electrode sets 4, 5, the cable-clamping units 7" and the electrode-clamping units (A), it is relatively easier to install and electrically connect the protection devices 83 and the surge protectors 85 to the first and second electrode sets 4, 5. Further, in this embodiment, since both of the first and second electrode sets 4, 5 are connected to the protection devices 83, the combiner box 100" is relatively safe to use. Moreover, the surge protectors 85 and the grounding electrode set 88 are used for conducting excess current to ground so as to maintain an electric potential equal to 0. Accordingly, safety of the combiner box 100" is further enhanced.

To sum up, with the staggered arrangement of the first and second input sockets 221, 222, it is relatively easier to design the molds used for forming the first and second input-connector jacks 225 and 226 and the first and second output-connector jacks 227 and 228 via injection molding. Further, the pre-assembled combiner module 10, 10', 10" facilitates installation process of the combiner box 100, 100', 100" so as to reduce a risk of human error, installation time, and labor-related costs. Also, a manufacturing cost of the combiner box 100, 100', 100" is reduced since the combiner module 10, 10', 10" does not utilize terminal blocks found in a conventional combiner box. In addition, by virtue of the protection devices 83, the surge protectors 85 and the grounding electrode set 88, the combiner box 100" is relatively safe to use.

## Claims

1. A combiner box (100, 100', 100"), **characterized by**:
a casing (2) including a bottom wall (21) and a surrounding wall (22) that cooperatively define an accommodating space (20), said surrounding wall (22) being formed with a plurality of first input sockets (221), a plurality of second input sockets (222), a first output socket (223) and a second output socket (224), said first and second input sockets (221, 222) being spaced apart from each other and being arranged along a first direction (X) parallel to said surrounding wall (22), said second input sockets (222) being disposed at a level between said first input sockets (221) and said bottom wall (21) and being alternatingly arranged with said first input sockets (221) along the first direction (X);
a combiner module (10, 10', 10") disposed in said accommodating space (20) of said casing (2) over said bottom wall (21), and including
an electrically insulating board (3) having a first surface (31), a second surface (32) opposite to said first surface, and a first side (33) connected between said first and second surfaces (31, 32) and extending along the first direction (X),
a first electrode set (4) disposed over said first surface (31) of said electrically insulating board (3), and including a plurality of first input electrodes (41) that are spaced apart from each other, that are arranged along the first direction (X) and that correspond respectively to said first input sockets (221) of said surrounding wall (22), and a first output electrode (42) that is electrically connected to said first input electrodes (41) and that corresponds to said first output socket (223) of said surrounding wall (22), and
a second electrode set (5) disposed on said second surface (32) of said electrically insulating board (3), and including a plurality of second input electrodes (51) that are spaced apart from each other, that are arranged along and partially cover said first side (33) of said electrically insulating board (3), that are disposed below said first input electrodes (41) with respect to said electrically insulating board (3), and that correspond respectively to said second input sockets (222) of said surrounding wall (22), and a second output electrode (52) that is electrically connected to said second input electrodes (51) and that corresponds to said second output socket (224) of said surrounding wall (22); and
an electrical connector unit (6) including
a plurality of first input terminals (61) disposed in said first input sockets (221) and electrically connected to said first input electrodes (41), respectively,
a plurality of second input terminals (62) disposed in said second input sockets and electrically connected to said second input electrodes (51), respectively,
a first output component (63, 63') corresponding to said first output socket (223) and electrically connected to said first output electrode (42), and
a second output component (64, 64') corresponding to said second output socket (224) and electrically connected to said second output electrode (52).

2. The combiner box (100, 100', 100") as claimed in Claim 1, **characterized in that** said electrically insulating board (3) includes a plurality of first insulating blocks (311) that are disposed on said first surface (31) at spaced-apart positions corresponding respectively to said first input electrodes (41) of said first electrode set (4), that project in a second direction (Z) perpendicular to said bottom wall (21) away from said first surface (31), and that are arranged at said first side (33) of said electrically insulating board (3) along the first direction (X), said first electrode set (4) being disposed on said first insulating blocks (311).

3. The combiner box (100, 100', 100") as claimed in Claim 2, **characterized in that**:
said first electrode set (4) further includes an elongated first conductive plate (43) that is mounted on said first insulating blocks (311) along the first direction (X), that has a longitudinal side (431) adjacent to said first side (33), and that is integrally formed with said first input and output electrodes (41, 42) to establish electrical connection among said first input and output electrodes (41, 42), said first input and output electrodes (41, 42) projecting from said longitudinal side (431) of said first conductive plate (43) in the second direction (Z) away from said first surface (31) of said electrically insulating board (3); and
said second electrode set (5) further includes an elongated second conductive plate (53) that is mounted on said second surface (32) of said electrically insulating board (3) along the first direction (X), that has a longitudinal side (531) adjacent to said first side (33), and that is integrally formed with said second input and output electrodes (51, 52) to establish electrical connection among said second input and output electrodes (51, 52), said second input and output electrodes (51, 52) projecting from said longitudinal side (531) of said second conductive plate (53) in the second direction (Z) toward said first surface (31) of said electrically insulating board (3).

4. The combiner box (100') as claimed in Claim 2, **characterized in that**:
said electrically insulating board (3) further has a second side (34) connected between said first and second surfaces (31, 32) and opposite and parallel to said first side (33), and a third side (35) connected between said first and second surfaces (31, 32) and perpendicular to said first and second sides (33, 34);
said first electrode set (4) further includes:
an elongated first conductive plate (43) that is mounted on said first surface (31) of said electrically insulating board (3) at said second side (34) along the first direction (X) and that has one end (432) adjacent to said third side (35), said first output electrode (42) of said first electrode set (4) being integrally formed with said first conductive plate (43), projecting upwardly from said one end (432) of said first conductive plate (43) with respect to said first surface (31), and being bent toward the first direction (X),
a plurality of conductive frames (44) that are electrically connected to and mounted on said first conductive plate (43) along the first direction (X) at positions corresponding respectively to the spaced-apart positions of said first insulating blocks (311), said first input electrodes (41) of said first electrode set (4) being mounted respectively on said first insulating blocks (311), and
a plurality of conducting wire components (45) each of which electrically connects a respective one of said first input electrodes (41) to a corresponding one of said conductive frames (44) so as to electrically connect said first input electrodes (41) to said first output electrode (42); and
said second electrode set (5) further includes an elongated second conductive plate (53) that is mounted on said second surface (32) of said electrically insulating board (3) along the first direction (X), that is integrally formed with said second input and output electrodes (51, 52) to establish electrical connection among said second input and output electrodes (51, 52), and that has one end (532) adjacent to said third side (35), said second input electrodes (51) projecting from a longitudinal side (531) of said second conductive plate (53) that is adjacent to said first side (33) toward said first surface (31) of said electrically insulating board (3), said second output electrode (52) being integrally formed with said second conductive plate (53), projecting upwardly from said one end (532) of said second conductive plate (53) with respect to said first surface (31), and being bent toward the first direction (X).

5. The combiner box (100') as claimed in Claim 4, further **characterized by** a partition plate (9) disposed in said accommodating space (20) in said casing (2) over said combiner module (10'), engaged with said surrounding wall (22), and formed with a plurality of openings (90);
**characterized in that** said combiner module (10') further includes a plurality of mounting frames (8) integrally formed with said electrically insulating board (3), disposed on a middle portion of said first surface (31) of said electrically insulating board (3) between said first and second sides (33, 34), registered respectively with said openings (90) in said partition plate (9), and arranged along the first direction (X), each of said mounting frames (8) including
a base (81) including a base part (811) disposed on said first surface (31) and having two opposite edges (813) parallel to the first direction (X), and a pair of protrusion parts (812) projecting respectively from said edges (813) in the second direction (Z) away from said first surface (31) and being bent toward opposite directions parallel to said first surface (31), each of said protrusion parts (812) cooperating with said first surface (31) to form a groove (80) therebetween, and
apluralityofpositioningplates (82) projecting from said base part (811) in the second direction (Z) away from said first surface (31).

6. The combiner box (100') as claimed in Claim 5, further **characterized by** a plurality of circuit protection devices (83) each of which is mounted on a respective one of said mounting frames (8) and is engaged with said grooves (80) of said respective one of said mounting frames (8), each of which is prevented from moving along the first direction (X) by said positioning plates (82) of said respective one of said mounting frames (8), and each of which includes a first socket (831) adjacent to a respective one of said first input electrodes (41) and a second socket (832) adjacent to a corresponding one of said conductive frames (44),
**characterized in that** each of said conducting wire components (45) of said first electrode set (4) includes a pair of wires (451, 451'), one of said wires (451) having one end (453) electrically connected to said respective one of said first input electrodes (41) and the other end (452) inserted into and electrically connected to said first socket (831) of one of said circuit protection devices (83), the other one of said wires (451') having one end (453') electrically connected to said corresponding one of said conductive frames (44) and the other end (452') inserted into and electrically connected to said second socket (832) of said one of said circuit protection devices (83), said wires (451, 451') of each of said conducting wire components (45) being electrically connected to each other through a respective one of said circuit protection devices (83).

7. The combiner box (100") as claimed in Claim 2, **characterized in that** each of said first insulating blocks (311) of said electrically insulating board (3) includes a first outer portion (315) disposed along and adjacent to said first side (33) of said electrically insulating board (3) and having a first dimension in the second direction (Z), and a first inner portion (316) connected to said first outer portion (315) and being farther from said first side (33) than said first outer portion (315);
**characterized in that** said electrically insulating board (3) further has a second side (34) connected between said first and second surfaces (31, 32) and opposite and parallel to said first side (33), and a third side (35) connected between said first and second surfaces (31, 32) and perpendicular to said first and second sides (33, 34), and further includes
a plurality of second insulating blocks (312) which are disposed on said first surface (31) at spaced-apart positions corresponding respectively to said second input electrodes (51) of said second electrode set (5), which project in the second direction (Z) away from said first surface (31), which are alternatingly arranged with said first insulating blocks (311) at said first side (33) along the first direction (X), which have said second input electrodes (51) disposed respectively thereon, and each of which includes
a second outer portion (317) disposed along and adjacent to said first side (33), and having a second dimension in the second direction (Z) shorter than the first dimension of said first outer portion (315) of each of said first insulating blocks (311), and
a second inner portion (318) connected to said second outer portion (317) and being farther from said first side (33) than said second outer portion (317), and
a plurality of third insulating blocks (313, 313') which are disposed on said first surface (31) along said second side (34) at spaced-apart positions corresponding respectively to said first and second insulating blocks (311, 312), and which project in the second direction (Z) away from said first surface (31) ;
**characterized in that** each of said first input electrodes (41) is mounted on a respective one of said first insulating blocks (311), and includes
a first electrode outer segment (411) disposed on said respective one of said first insulating blocks (311), extending from said first outer portion (315) to said first inner portion (316) of said respective one of said first insulating blocks (311), and electrically connected to a respective one of said first input terminals (61), and
a first electrode inner segment (412) partially overlapping and electrically connected to said first electrode outer segment (411), and extending from said first inner portion (316) of said respective one of said first insulating blocks (311) toward said second side (34) of said electrically insulating board (3);
**characterized in that** said first electrode set (4) further includes
a plurality of first connecting electrodes (46) which are disposed respectively on a first group of said third insulating blocks (313) that are disposed at the spaced-apart positions corresponding respectively to said first insulating blocks (311), which extend respectively from said third insulating blocks (313) of the first group toward said first side (33) of said electrically insulating board (3), and which are connected electrically and respectively to said first input electrodes (41), and
a first conductive bus-plate (47) which is disposed on said first surface (31) of said electrically insulating board (3) at said second side (34), and which includes a first bus segment (471) disposed on said first surface (31) and extending along the first direction (X), and a plurality of first connecting segments (472) electrically connected to and extending from said bus segment (471) toward said first side (33) and connected electrically and respectively to said first connecting electrodes (46), said first output electrode (42) being disposed at said third side (35) of said electrically insulating board (3) and integrally formed with said first conductive bus-plate (47);
**characterized in that** each of said second input electrodes (51) is mounted on a respective one of said second insulating blocks (312), and includes
a second electrode outer segment (511) disposed on said respective one of said second insulating blocks (312), extending from said second outer portion (317) to said second inner portion (318) of said respective one of said second insulating blocks (312), and electrically connected to a respective one of said second input terminals (62), and
a second electrode inner segment (512) partially overlapping and electrically connected to said second electrode outer segment (511), and extending from said second inner portion (318) of said respective one of said second insulating blocks (312) toward said second side (34) of said electrically insulating board (3);
**characterized in that** said second electrode set (5) further includes
a plurality of second connecting electrodes (54) which are disposed respectively on a second group of said third insulating blocks (313') that are disposed at the spaced-apart positions corresponding respectively to said second insulating blocks (312), which extend respectively from said third insulating blocks (313') of the second group toward said first side (33) of said electrically insulating board (3), and which are connected electrically and respectively to said second input electrodes (51),
a second conductive bus-plate (55) which is disposed on said second surface (32) of said electrically insulating board (3) close to said second side (34), and which includes
a second bus segment (551) disposed on said second surface (32), and extending along the first direction (X), and
a plurality of second connecting segments (552) electrically connected to and extending from said second bus segment (551) through said electrically insulating board (3) to said first surface (31), and connected electrically and respectively to said second connecting electrodes (54), and
a conducting plate (56) which is disposed on said second surface (32) of said electrically insulating board (3) close to said third side (35), which extends from said second bus segment (551) of said second conductive bus-plate (55) toward said second output electrode (52), and which is electrically connected to said second bus segment (551) and said second output electrode (52), said second output electrode (52) being disposed at said third side (35) of said electrically insulating board (3) and being integrally formed with said conducting plate (56).

8. The combiner box (100") as claimed in Claim 7, **characterized in that**:
said combiner module (10") further includes a mounting unit (84) integrally formed with said electrically insulating board (3), and including
a pair of spaced-apart protruding rods (841) disposed on a middle portion of said first surface (31) of said electrically insulating board (3) between said first and second sides (33, 34), and extending along the first direction (X), and
plural pairs of positioning components (842), each of the pairs of said positioning components (842) being disposed respectively on said protruding rods (841), being registered with each other, and being spaced apart from another pair of said positioning components (842) in the first direction (X), adjacent two pairs of said positioning components (842) cooperatively defining a receiving space (840) registered with a corresponding one of said first and second insulating blocks (311, 312) and with a corresponding one of said third insulating blocks (313, 313');
said combiner box (100") is further **characterized by** a plurality of circuit protection devices (83), each of which is mounted on said protruding rods (841) in said receiving space (840) between the adjacent two pairs of said positioning components (842), each of which is prevented from moving along the first direction (X) by the adjacent two pairs of said positioning components (842), and each of which includes a first socket (831) adjacent to a respective one of said first and second input electrodes (41, 51) and a second socket (832) adjacent to a corresponding one of said third insulating blocks (313, 313');
said combiner box (100") is further **characterized by** a partition plate (9) disposed in said accommodating space (20) in said casing (2) over said combiner module (10"), engaged with said surrounding wall (22), and formed with a plurality of openings (90), said circuit protection devices (83) being exposed from said partition plate (9) through said openings (90), respectively;
said first electrode inner segments (412) of said first input electrodes (41) of said first electrode set (4) and said second electrode inner segments (512) of said second input electrodes (51) of said second electrode set (5) are inserted into and electrically connected to said first sockets (831) of said circuit protection devices (83), respectively; and
said first connecting electrodes (46) of said first electrode set (4) and said second connecting electrodes (54) of said second electrode set (5) are inserted into and electrically connected to said second sockets (832) of said circuit protection devices (83), respectively, so that said first and second connecting electrodes (46, 54) are electrically connected to said first and second input electrodes (41, 51) through said circuit protection devices (83), respectively.

9. The combiner box (100") as claimed in Claim 8, **characterized in that**:
said electrically insulating board (3) further includes a fourth insulating block (314) disposed on said first surface (31) at said first side (33) close to said third side (35) and projecting in the second direction (Z) away from said first surface (31), and a plurality of fifth insulating blocks (313") disposed on said first surface (31) along said second side (34) close to said third side (35) and projecting in the second direction (Z) away from said first surface (31);
said surrounding wall (22) is further formed with a ground-wire socket (270) at a position registered with said fourth insulating block (314) and allowing a ground wire to be inserted therethrough;
said combiner box (100") is further **characterized by** a plurality of surge protectors (85) which are arranged on said first surface (31) of said electrically insulating board (3) along the first direction (X) at positions registered respectively with said fifth insulation blocks (313"), each of said surge protectors (85) including a main body (851) disposed on said protruding rods (841) of said mounting unit (84), and an electrode plate (852) disposed on a corresponding one of said fifth insulation blocks (313") and connected to said main body (851);
said first conductive bus-plate (47) of said first electrode set (4) further includes a first connecting piece (473) extending from said bus segment (471) of said first conductive bus-plate (47) toward said first side (33) and electrically connected to said electrode plate (852) of a first one of said surge protectors (85);
said second conductive bus plate (55) of said second electrode set (5) further includes a second connecting piece (553) extending from said second bus segment (551) of said second conductive bus-plate (55) through said electrically insulating board (3) to said first surface (31), and electrically connected to said electrode plate (852) of a second one of said surge protectors (85); and
said combiner module (10") is further **characterized by** a grounding electrode set (88) including
a first grounding electrode (881) disposed at a corresponding one of said fifth insulating blocks (313") that is registered with a third one of said surge protectors (85), electrically connected to said electrode plate (852) of said third one of said surge protectors (85), and extending from said first surface (31) through said electrically insulating board (3) to said second surface (32), and
a second grounding electrode (882) disposed on said second surface (32) of said electrically insulating board (3), extending from said first grounding electrode (881) toward said first side (33), extending through said electrically insulating board (3) to said first surface (31), and including a first segment (883) electrically connected to said first grounding electrode (881) and an opposite second segment (884) disposed at said fourth insulating block (314) and to be electrically connected to the ground wire.

10. The combiner box (100") as claimed in Claim 9, **characterized in that** each of said first and second output components (63', 64') of said electrical connector unit (6) is a connector allowing a cable (65) to be inserted therethrough so that the cable (65) is electrically connected to a respective one of said first and second output electrodes (42, 52), and said combiner module (10") further includes:
a pair of cable-clamping units (7") for clamping and securing the cables (65) to said first and second output electrodes (42, 52), respectively, each of said cable-clamping units (7") including
a fixed frame (71) having
a pair of vertical plates (712) connected perpendicularly to a corresponding one of said first and second output electrodes (42, 52), extending along the second direction (Z), and having respective top edges (716), and
a top plate (713) connected to said top edges (716) of said vertical plates (712), formed with a threaded through hole (717), and cooperating with said vertical plates (712) to define a clamping space (710) for receiving the cable (65),
a C-shaped component (74) having a first plate portion (741) disposed out of said clamping space (710) and parallel to said top plate (713) of said fixed frame (71), a vertical plate portion (743) connected vertically to said first plate portion (741) and extending toward said clamping space (710), and a second plate portion (742) connected vertically to said vertical plate portion (743) and disposed in said clamping space (710), and
a bolt (73) disposed at and extending through said first plate portion (741) of said C-shaped component (74), and being screwed into said threaded through hole (717) in said top plate (713) for moving said second plate portion (742) of said C-shaped component (74) upwardly and downwardly in said clamping space (710) with respect to said corresponding one of said first and second output electrodes (42, 52) and for urging said second plate portion (742) to press the cable (65) abutting against said corresponding one of said first and second output electrodes (42, 52); and
a plurality of electrode-clamping units (A) which are mounted respectively on said first, second, third, fourth and fifth insulating blocks (311, 312, 313, 313', 314, 313"), and each of which includes
a mounting frame (A1) mounted on and cooperating with a corresponding one of said first, second, third, fourth and fifth insulating blocks (311, 312, 313, 313', 314, 313") to define an accommodating space (A10) therebetween, and formed with a threaded inner hole (A11),
a C-shaped member (A2) having a first plate portion (A21) disposed out of said accommodating space (A10), a vertical plate portion (A23) connected vertically to said first plate portion (A21) and extending toward said accommodating space (A10), and a second plate portion (A22) connected vertically to said vertical plate portion (A23) and disposed in said accommodating space (A10), and
a bolt member (A3) disposed at and extending through said first plate portion (A21) of said C-shaped member (A2), and being screwed into said threaded inner hole (A11) in said mounting frame (A1) for moving said second plate portion (A22) of said C-shaped member (A2) upwardly and downwardly in said accommodating space (A10) with respect to said corresponding one of said insulating blocks (311, 312, 313, 313', 313", 314) and for urging said second plate portion (A22) to press a corresponding one of said first input electrodes (41), said second input electrodes (51), said first connecting electrodes (46), said second connecting electrodes (54), said electrode plates (852) of said surge protectors (85), and the ground wire abutting against said corresponding one of said insulating blocks (311, 312, 313, 313', 313", 314).

11. The combiner box (100) as claimed in any one of Claims 1 to 3, **characterized in that** each of said first and second output components (63, 64) of said electrical connector unit (6) is an output terminal electrically connected to and substantially perpendicular to a respective one of said first and second output electrodes (42, 52), said first input terminals (61) are substantially perpendicular to said first input electrodes (41) of said first electrode set (4), respectively, and said second input terminals (62) are substantially perpendicular to said second input electrodes (51) of said second electrode set (5), respectively.

12. The combiner box (100) as claimed in Claim 11, **characterized in that** said casing (2) further includes:
a plurality of first input-connector jacks (225) that are substantiallyperpendicular to and project from said surrounding wall (22) outside of said accommodating space (20), and that are registered with and in spatial communication with said first input sockets (221) of said surrounding wall (22) to receive said first input terminals (61) therein, respectively;
a plurality of second input-connector jacks (226) that are substantially perpendicular to and project from said surrounding wall (22) outside of said accommodating space (20), and that are registered with and in spatial communication with said second input sockets (222) of said surrounding wall (22) to receive said second input terminals (62) therein, respectively; and
first and second output-connector jacks (227, 228) that are substantially perpendicular to and project from said surrounding wall (22) outside of said accommodating space (20), and that are registered with and in spatial communication with said first and second output sockets (223, 224) of said surrounding wall (22) to receive said terminals of said first and second output components (63, 64) therein, respectively.

13. The combiner box (100', 100") as claimed in any one of Claims 1 to 9, **characterized in that** each of said first and second output components (63', 64') of said electrical connector unit (6) is a connector allowing a cable (65) having a core (651) to be inserted therethrough so that the core (651) is electrically connected to a respective one of said first and second output electrodes (42, 52), said first input terminals (61) are substantially perpendicular to said first input electrodes (41) of said first electrode set (4), respectively, and said second input terminals (62) are substantially perpendicular to said second input electrodes (51) of said second electrode set (5), respectively.

14. The combiner box (100', 100") as claimed in Claim 13, **characterized in that**:
said casing (2) further includes
a plurality of first input-connector jacks (225) that are substantially perpendicular to and project from said surrounding wall (22) outside of said accommodating space (20), and that are registered with and in spatial communication with said first input sockets (221) of said surrounding wall (22), respectively, and
a plurality of second input-connector jacks (226) that are substantially perpendicular to and project from said surrounding wall (22) outside of said accommodating space (20), and that are registered with and in spatial communication with said second input sockets (222) of said surrounding wall (22), respectively; and
said connector of each of said first and second output components (63', 64') includes a union nut (26) that is substantially perpendicular to and projects from said surrounding wall (22) outside of said accommodating space (20) and that is registered with and in spatial communication with a respective one of said first and second output sockets (223, 224) of said surrounding wall (22) to allow insertion of the cable (65), and a waterproof nut (25) fittingly sleeved around said union nut (26) for securing the cable (65) received in said union nut (26).

15. The combiner box (100') as claimed in Claim 12, **characterized in that** said combiner module (10') further includes a pair of clamping units (7) for clamping and securing the cables (65) to said first and second output electrodes (42, 52), respectively, each of said clamping units (7) including:
a fixed frame (71) having
at least two base plates (711) mounted on a corresponding one of said first and second output electrodes (42, 52),
a pair of vertical plates (712) each of which is connected perpendicularly to a corresponding one of said base plates (711) and extends along the second direction (Z), each of which is formed with a slot (714), and each of which has a top edge (716), and
a top plate (713) connected to said top edges (716) of said vertical plates (712) and formed with a through hole (715),
said vertical plates (712) and said top plate (713) cooperatively defining a clamping space (710) for receiving the core (651) of the cable (65), said slots (714) of said vertical plates (712) and said through hole (715) of said top plate (713) being in spatial communication with said clamping space (710);
a slidable block (72) including
a block body (721) fittingly disposed in said clamping space (710), and having a top surface (723) that faces said top plate (713) and that is formed with a threaded hole (720), and a pair of side surfaces (724) that face said vertical plates (712), respectively, and
a pair of slide rods (722) projecting from said side surfaces (724) of said block body (721) and extending slidably into said slots (714) of said vertical plates (712), respectively; and
a bolt (73) extending through said through hole (715) in said top plate (713) and being screwed into said threaded hole (720) in said block body (721) of said slidable block (72) for moving said slidable block (72) upwardly and downwardly in said clamping space (710) with respect to said corresponding one of said first and second output electrodes (42, 52) and for urging said slidable block (72) to press the core (651) of the cable (65) abutting against said corresponding one of said first and second output electrodes (42, 52).
